# EUROPEAN PATENT APPLICATION

(11) **EP 2 402 623 A1**
(43) Date of publication of application: **04.01.2012**
(21) Application number: 10746100.6
(22) Date of filing: 15.02.2010
(51) Int. Cl.: F16D 25/12, B63H 23/30, F02D 29/00, F02D 29/02, F02D 45/00

(54) **ENGINE CONTROLLER**

(30) Priority: 24.02.2009 JP 2009041325
(71) Applicant: Yanmar Co., Ltd., Osaka-shi, Osaka 530-0013 (JP)
(72) Inventor: KITAGAWA, Kazuhiro, Osaka-shi Osaka 530-0013 (JP); TAKAGAWA, Isao, Osaka-shi Osaka 530-0013 (JP)
(74) Representative: Jostarndt, Hans-Dieter
(86) International application number: PCT/JP2010/052148
(87) International publication number: WO 2010/098219

(57) **Abstract**

An engine controller (40) provided with a control device (ECU43) for controlling an engine (10) has a first threshold vale for a minimum power output (W) on the condition where the clutch is engaged and a second threshold vale for a maximum power output (W) on the condition where the clutch is released. If detected power output remains below the second threshold value for a predetermined period of time during which the clutch is engaged, or if detected power output remains higher than the first threshold value for a predetermined period of time during which the clutch is released, the controller determines that a clutch position sensor (41) is malfunctioning.

## Description

### Technical Field

The present invention relates to an art of an engine controller mounted on an engine. In more detail, the present invention relates to an engine controller which can control an engine even if a clutch position sensor is broken.

### Background Art

Generally, in a marine main engine driven by power of an engine (a main body of ship), a clutch which connects and disconnects transmission of the power of the engine is provided between the engine and a propeller, and by operating the clutch, the power of the engine can be transmitted suitably corresponding to the driving state. An engine controller is known in which a clutch position sensor detecting the position of the clutch is provided and engine is controlled based on the state of the clutch. However, there is a defect that when the clutch position sensor is operated incorrectly or broken by vibration of the marine main engine or the like, the engine control becomes unstable.

Therefore, an art of an engine controller is well known in which a plurality of clutch position sensors are provided and position of clutch is detected by combination of the clutch position sensors, whereby the possibility of incorrect operation of the clutch position sensors is reduced, and even if one of the clutch position sensors is broken, the position of the clutch can be detected by the other clutch position sensors.

However, though the incorrect operation of the clutch position sensor because of the trouble and the influence on the engine control is reduced, there is a problem in that the engine control becomes unstable when the plurality of the clutch position sensors are broken.
Patent Literature 1: the Japanese Patent Laid Open Gazette Hei. 6-89792

### Disclosure of Invention

### Problems to Be Solved by the Invention

The present invention is provided in consideration of the above problems, and the purpose of the present invention is to provide an engine controller which can control an engine suitably even if abnormality occurs on a clutch position sensor.

### Means for Solving the Problems

According to claim 1, an engine controller includes a clutch part switched among a first position at which power of an engine is transmitted as rotational power of one direction, a second position at which the power of the engine is transmitted as rotational power of the other direction, and a third position at which the power of the engine is not transmitted, a clutch position detection means detecting the clutch switching position of the clutch part, and a control means controlling the engine based on the switching position of the clutch part detected by the clutch position detection means and the power of the engine calculated from operation amount of an electronic governor. In the control means, the minimum value of the power in the case in which the switching position of the clutch part is the first position or the second position is set as a first set value. The minimum value of the power in the case in which the switching position of the clutch part is the third position is set as a second set value. When the state in which the switching position of the clutch part is the first position or the second position and the power is equal to or less than the second set value is kept for a predetermined period, the clutch position detection means is judged to be abnormal. When the state in which the switching position of the clutch part is the third position and the power is equal to or more than the first set value is kept for the predetermined period, the clutch position detection means is judged to be abnormal. When the state in which the switching position of the clutch part is the first position and the second position is kept for the predetermined period, the clutch position detection means is judged to be abnormal.

According to claim 2, when the clutch position detection means is judged to be abnormal and the power is kept to be equal to or less than the second set value for the predetermined period, the control means makes a control gain of the engine low, and when the clutch position detection means is judged to be abnormal and the power is kept to be equal to or more than the first set value for the predetermined period, the control means makes the control gain of the engine high.

According to claim 3, when the clutch position detection means is judged to be abnormal and the power is kept to be equal to or less than the second set value for the predetermined period, the engine control means invalidates the operation of output of the engine, and when the clutch position detection means is judged to be abnormal and the power is kept to be equal to or more than the first set value for the predetermined period, the engine control means validates the operation of output of the engine.

### Effect of the Invention

The present invention constructed as the above brings the following effects.

According to claim 1, whether the power of the engine is transmitted or not can be judged based on the switching position of the clutch part detected by the clutch position detection means and the power calculated from the operation amount of the electronic governor. Therefore, even if the abnormality occurs in the clutch position detection means, the appropriate engine control can be performed.

According to claim 2, the control gain of the engine can be changed based on the clutch switching position of the clutch part detected by the clutch position detection means and the power calculated from the operation amount of the electronic governor. Therefore, even if the abnormality occurs in the clutch position detection means, the appropriate engine control can be performed.

According to claim 3, the operation of the engine can be invalidated based on the clutch switching position of the clutch part detected by the clutch position detection means and the power calculated from the operation amount of the electronic governor. Therefore, even if the abnormality occurs in the clutch position detection means, the appropriate engine control can be performed.

### Brief Description of Drawings

[Fig. 1] It is a schematic drawing of an engine controller according to a first embodiment of the present invention.
[Fig. 2] It is a flow chart of control processes of the engine controller according to the present invention.
[Fig. 3] It is a flow chart of control processes of the engine controller according to the present invention.
[Fig. 4] It is a flow chart of control processes of the engine controller according to the present invention.

### Description of Notations

- 10: engine
- 11: electronic governor
- 20: clutch part
- 41: clutch position sensor
- 42: accelerator
- 43: ECU
- W: power
- P: switching position
- P: first position
- P2: second position
- P3: third position

### The Best Mode for Carrying out the Invention

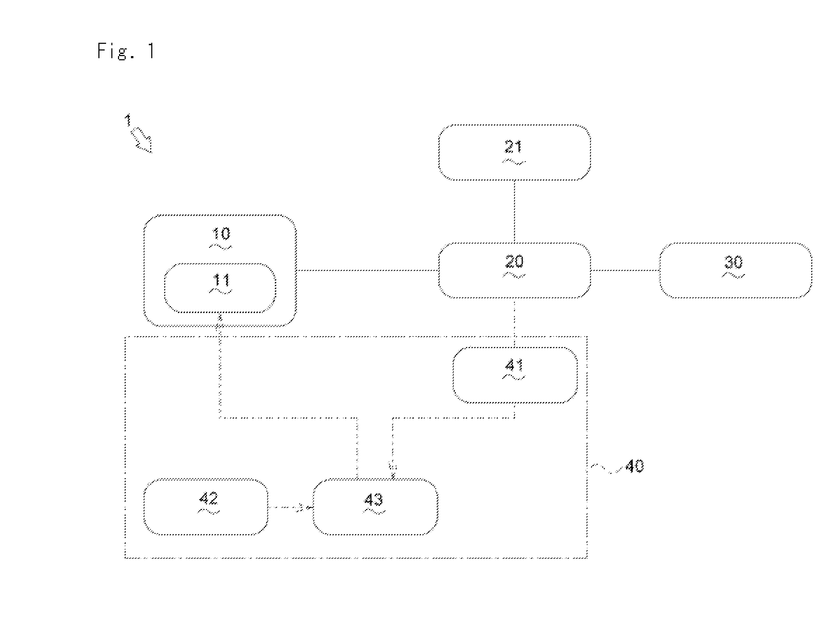

Next, explanation will be given on an engine controller 40 which is a first embodiment according to the present invention referring to Fig. 1.

Firstly, explanation will be given on schematic construction of a ship 1 according to an embodiment of the present invention.

The ship 1 is advanced on the water by actuating a propeller 30 or the like from power of an engine 10. The ship 1 includes the engine 10, a clutch part 20, the propeller 30, the engine controller 40 and the like.

The engine 10 generates power W by combustion of fuel. In the engine 10 having a combustion chamber (not shown) in which fuel is burnt and the like, an electronic governor 11 is provided which controls amount of fuel supplied to the combustion chamber. The engine 10 outputs power generated by combustion of fuel as the power W

The clutch part 20 connects or disconnects transmission of the power W and changes the direction of rotational power. The clutch part 20 is provided between the engine 10 and the propeller 30 and transmits the power W of the engine 10 to the propeller 30. The clutch part 20 can be connected to a first position P1 at which the power W generated by the engine 10 is transmitted as rotational power of one direction, a second position P2 at which the power W of the engine 10 is transmitted as rotational power of the other direction, or a third position P3 at which the power W of the engine 10 is not transmitted by a clutch operation member 21.

The propeller 30 generates propulsive power of the ship. The propeller 30 is connected to the clutch part 20 and driven by the power W of the engine 10 transmitted through the clutch part 20.

Concretely, the propeller 30 moves the ship 1 forward when the power W of the engine 10 is transmitted by the clutch part 20 as the rotational power of the one direction, and moves the ship 1 rearward when the power W is transmitted as the rotational power of the other direction.

The engine controller 40 controls the output of the engine 10. The engine controller 40 judges propriety of switching of a control gain G and an output command of the engine 10 inputted through an accelerator 42 based on the power W of the engine 10 and clutch switching position P of the clutch part 20 so as to control the output of the engine 10 suitably.

Next, explanation will be given on the construction of the engine controller 40 referring to Fig. 1.

As shown in Fig. 1, the engine controller 40 includes a clutch position detection means (hereinafter, referred to as "clutch position sensor") 41, the accelerator 42 (rotational speed set means), a control means (hereinafter, referred to as "ECU") 43, and the like.

The clutch position sensor 41 detects the clutch switching position P of the clutch part 20. The clutch position sensor 41 is disposed in the clutch part 20 and transmits the detected clutch switching position P of the clutch part 20 to the ECU 43.

The accelerator 42 inputs a command about the power W of the engine 10. The accelerator 42 is provided in a driver's seat (not shown) or the like and transmits the output command about the power W of the engine 10 inputted by an operator to the ECU 43.

The ECU 43 controls the engine 10 including the electronic governor 11 based on the values inputted from the clutch position sensor 41 and the accelerator 42. Concretely, the ECU 43 may be constructed by connecting a CPU, a ROM, a RAM, a HDD and the like through a bus, or may be constructed by a one-chip LSI or the like. In the ECU 43, various programs and data for controlling the action of the engine 10 including the electronic governor 11 are stored. Based on the programs and the like, the ECU 43 calculates the power W of the engine from the operation amount of the electronic governor 11 and the like, and performs the control, in which the control gain G of the engine 10 is switched to Low or High corresponding to the clutch switching position P of the clutch part 20, and the like. In the ECU 43, the minimum value of the power W in the case in which the clutch switching position P of the clutch part 20 is the first position P1 or the second position P2 is set as a first set value, and the minimum value of the power W in the case in which the clutch switching position P of the clutch part 20 is the third position P3 is set as a second set value.

The ECU 43 is connected to the electronic governor 11 and controls the action of the electronic governor 11 so as to calculate the power W of the engine 10, thereby controlling the action of the engine 10.

The ECU 43 is connected to the clutch position sensor 41 so as to obtain the clutch switching position P of the clutch part 20 inputted to the clutch position sensor 41.

The ECU 43 is connected to the accelerator 42 so as to obtain the output command about the power W of the engine 10 inputted to the accelerator 42.

Next, explanation will be given on the control mode of the engine controller 40 of the ship 1 according to the embodiment of the present invention.

The engine controller 40 judges the driving state of the ship 1 based on the clutch switching position P of the clutch part 20 detected by the clutch position sensor 41 at the normal driving state, and controls the change of the control gain G of the engine 10 and the output setting of the power W of the engine 10. In this case, when abnormality occurs in the clutch position sensor 41, the abnormality of the clutch position sensor 41 is judged based on the clutch switching position P of the clutch part 20 and the power W calculated from the operation amount of the electronic governor 11, and the change of the control gain G of the engine 10 and the output setting of the engine 10 are controlled. The control gain is a proportional gain, derivative gain or integrative gain in the case of feedback control.

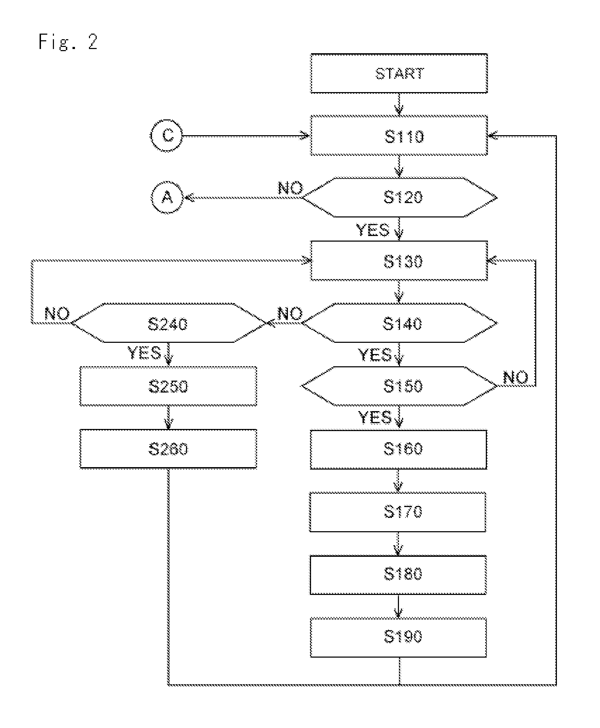

Explanation will be given on the control mode of the ECU 43 concretely referring to Figs. 2, 3 and 4.

As shown in Fig. 2, when the clutch operation member 21 is operated, the ECU 43 shifts the control step to a step S110.

At the step S110, the ECU 43 obtains the clutch switching position P of the clutch part 20 from the clutch position sensor 41, and then shifts the control step to a step S120.

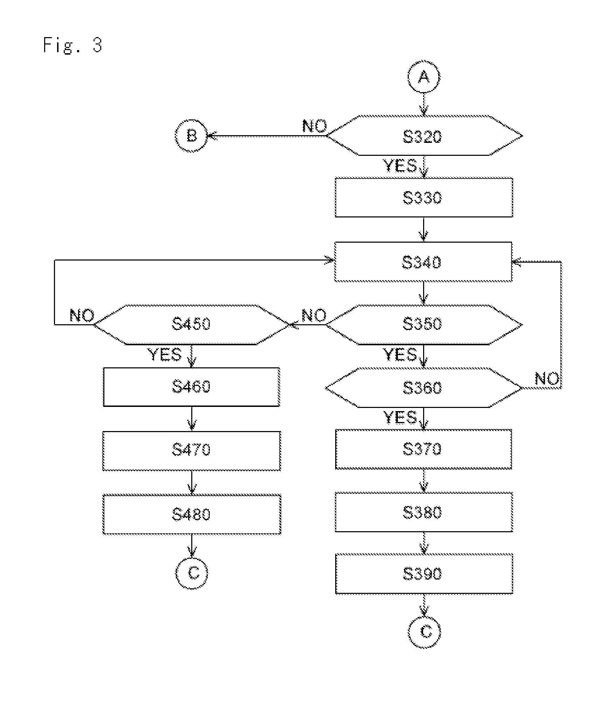

At the step S120, the ECU 43 judges whether the obtained clutch switching position P of the clutch part 20 is the first position P1, the second position P2 or not. Concretely, the first position P1 is regarded as the forward rotation and the second position P2 is regarded as the rearward rotation.
As a result, when the clutch switching position P of the clutch part 20 is the first position P1 or the second position P2, the control step is shifted to a step S130.
When the clutch switching position P of the clutch part 20 is not the first position P1 or the second position P2, the control step is shifted to a step S320 (see Fig. 3).

At the step S130, the ECU 43 calculates the power W from the operation amount of the electronic governor 11 and the like and then shifts the control step to a step S140.

At the step S140, the ECU 43 judges whether the calculated power W is equal to or less than the second set value or not.
As a result, when the power W is equal to or less than the second set value, the control step is shifted to a step S150.
When the power W is more than the second set value, the control step is shifted to a step S240.

At the step S150, the ECU 43 judges whether the calculated power W is kept to be equal to or less than the second set value for a predetermined period or not.
As a result, when the power W is kept to be equal to or less than the second set value for the predetermined period, the control step is shifted to a step S160.
When the power W is not kept to be equal to or less than the second set value for the predetermined period, the control step is shifted to a step S130.

At the step S160, the ECU 43 judges the clutch position sensor 41 to be abnormal and then shifts the control step to a step S170.

At the step S170, the ECU 43 judges that the clutch switching position P of the clutch part 20 is the third position P3 and then shifts the control step to a step S180.

At the step S180, the ECU 43 changes the control gain G of the engine 10 to Low and then shifts the control step to a step S190. By changing the control gain G of the engine 10 to Low, the control state is stabilized.

At the step S190, the ECU 43 repeals the operation of output of the engine 10 by the accelerator 42 and then shifts the control step to a step S110.

At the step S240, the ECU 43 judges whether the calculated power W is kept to be equal to or more than the first set value for a predetermined period or not.
As a result, when the power W is kept to be equal to or more than the first set value for the predetermined period, the control step is shifted to a step S250.
When the power W is not kept to be equal to or more than the first set value for the predetermined period, the control step is shifted to a step S130.

At the step S250, the ECU 43 judges the clutch position sensor 41 to be normal and then shifts the control step to a step S260.

At the step S260, the ECU 43 continues the control of the engine 10 and shifts the control step to a step S110.

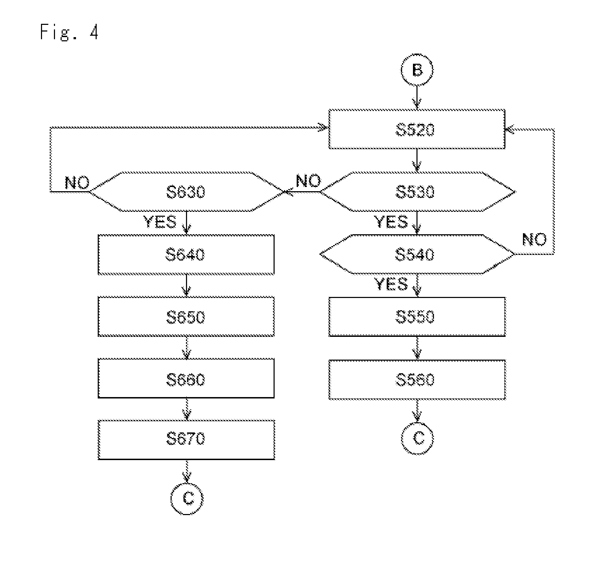

As shown in Fig. 3, at the step S320, the ECU 43 judges whether the obtained clutch switching position P of the clutch part 20 is the first position P1 and the second position P2 or not.
As a result, when the clutch switching position P of the clutch part 20 is the first position P1 and the second position P2, the control step is shifted to a step S330.
When the clutch switching position P of the clutch part 20 is not the first position P1 and the second position P2, the control step is shifted to a step S520 (see Fig. 4).

At the step S330, the ECU 43 judges the clutch position sensor 41 to be abnormal and then shifts the control step to a step S340.

At the step S340, the ECU 43 calculates the power W from the operation amount of the electronic governor 11 and the like and then shifts the control step to a step S350.

At the step S350, the ECU 43 judges whether the calculated power W is equal to or less than the second set value or not.
As a result, when the power W is equal to or less than the second set value, the control step is shifted to a step S360.
When the power W is more than the second set value, the control step is shifted to a step S450.

At the step S360, the ECU 43 judges whether the calculated power W is kept to be equal to or less than the second set value for a predetermined period or not.
As a result, when the power W is kept to be equal to or less than the second set value for the predetermined period, the control step is shifted to a step S370.
When the power W is not kept to be equal to or less than the second set value for the predetermined period, the control step is shifted to a step S340.

At the step S370, the ECU 43 judges that the clutch switching position P of the clutch part 20 is the third position P3 and then shifts the control step to a step S380.

At the step S380, the ECU 43 changes the control gain G of the engine 10 to Low and then shifts the control step to a step S390.

At the step S390, the ECU 43 repeals the operation of output of the engine 10 by the accelerator 42 and then shifts the control step to a step S110 (see Fig. 2).

At the step S450, the ECU 43 judges whether the calculated power W is kept to be equal to or more than the first set value for a predetermined period or not.
As a result, when the power W is kept to be equal to or more than the first set value for the predetermined period, the control step is shifted to a step S460.
When the power W is not kept to be equal to or more than the first set value for the predetermined period, the control step is shifted to a step S340.

At the step S460, the ECU 43 judges that the clutch switching position P of the clutch part 20 is the first position P1 or the second position P2, and then shifts the control step to a step S470.

At the step S470, the ECU 43 changes the control gain G of the engine 10 to High and then shifts the control step to a step S480.

At the step S480, the ECU 43 validates the operation of output of the engine 10 by the accelerator 42 and then shifts the control step to a step S110 (see Fig. 2).

At the step S520, the ECU 43 calculates the power W from the operation amount of the electronic governor 11 and the like and then shifts the control step to a step S530.

As shown in Fig. 4, at the step S530, the ECU 43 judges whether the calculated power W is equal to or less than the second set value or not.
As a result, when the power W is equal to or less than the second set value, the control step is shifted to a step S540.
When the power W is more than the second set value, the control step is shifted to a step S630.

At the step S540, the ECU 43 judges whether the calculated power W is kept to be equal to or less than the second set value for a predetermined period or not.
As a result, when the power W is kept to be equal to or less than the second set value for the predetermined period, the control step is shifted to a step S550.
When the power W is not kept to be equal to or less than the second set value for the predetermined period, the control step is shifted to a step S520.

At the step S550, the ECU 43 judges the clutch position sensor 41 to be normal and then shifts the control step to a step S560.

At the step S560, the ECU 43 continues the control of the engine 10 and shifts the control step to a step S110 (see Fig. 2).

At the step S630, the ECU 43 judges whether the calculated power W is kept to be equal to or more than the first set value for a predetermined period or not.
As a result, when the power W is kept to be equal to or more than the first set value for the predetermined period, the control step is shifted to a step S640.
When the power W is not kept to be equal to or more than the first set value for the predetermined period, the control step is shifted to a step S520.

At the step S640, the ECU 43 judges the clutch position sensor 41 to be abnormal and then shifts the control step to a step S650.

At the step S650, the ECU 43 judges the clutch switching position P of the clutch part 20 is the first position P1 or the second position P2, and then shifts the control step to a step S660.

At the step S660, the ECU 43 changes the control gain G of the engine 10 to High and then shifts the control step to a step S670.

At the step S670, the ECU 43 validates the operation of output of the engine 10 by the accelerator 42 and then shifts the control step to a step S110 (see Fig. 2).

As mentioned above, the engine controller 40 includes the clutch part 20 switched among the first position P1 at which the power W of the engine 10 is transmitted as the power W of the one direction, the second position P2 at which the power W of the engine 10 is transmitted as the power W of the other direction and the third position P3 at which the power W of the engine 10 is not transmitted, the clutch position sensor 41 which is the clutch position detection means detecting the clutch switching position P of the clutch part 20, and the ECU 43 which is the control means controlling the engine 10 based on the clutch switching position P of the clutch part 20 detected by the clutch position sensor 41 and the power W of the engine 10 calculated from the operation amount of the electronic governor 11. In the ECU 43, the minimum value of the power W in the case in which the clutch switching position P of the clutch part 20 is the first position P1 or the second position P2 is set as the first set value, and the minimum value of the power W in the case in which the clutch switching position P of the clutch part 20 is the third position P3 is set as the second set value. When the state in which the clutch switching position P of the clutch part 20 is the first position P1 or the second position P2 and the power W is equal to or less than the second set value is kept for the predetermined period, the ECU 43 judges the clutch position sensor 41 to be abnormal. When the state in which the clutch switching position P of the clutch part 20 is the third position P3 and the power W is equal to or more than the second set value is kept for the predetermined period, the ECU 43 judges the clutch position sensor 41 to be abnormal. When the state in which the clutch switching position P of the clutch part 20 is the first position P1 and the second position P2 is kept for the predetermined period, the ECU 43 judges the clutch position sensor 41 to be abnormal.
According to the construction, whether the power W of the engine 10 is transmitted or not can be judged based on the clutch switching position P of the clutch part 20 and the power W Therefore, even if the abnormality occurs in the clutch position sensor 41, the appropriate engine control can be performed.

When the clutch position sensor 41 is judged to be abnormal and the power W is kept to be equal to or less than the second set value for the predetermined period, the engine controller 40 makes the control gain G of the engine 10 low, and when the clutch position sensor 41 is judged to be abnormal and the power W is kept to be equal to or more than the first set value for the predetermined period, the engine controller 40 makes the control gain G of the engine 10 high.
According to the construction, the control gain G of the engine 10 can be changed based on the clutch switching position P of the clutch part 20 and the power W Therefore, even if the abnormality occurs in the clutch position sensor 41, the appropriate engine control can be performed.

When the clutch position sensor 41 is judged to be abnormal and the power W is kept to be equal to or less than the second set value for the predetermined period, the engine controller 40 invalidates the operation of output of the engine 10, and when the clutch position sensor 41 is judged to be abnormal and the power W is kept to be equal to or more than the first set value for the predetermined period, the engine controller 40 validates the operation of output of the engine 10.
According to the construction, the operation of the engine 10 can be invalidated based on the clutch switching position P of the clutch part 20 and the power W Therefore, even if the abnormality occurs in the clutch position sensor 41, the appropriate engine control can be performed.

### Industrial Applicability

The present invention can be used as an art of an engine controller mounted on an engine, and can be employed for various kinds of engines.

## Claims

1. An engine controller comprising:
a clutch part switched among a first position at which power of an engine is transmitted as rotational power of one direction, a second position at which the power of the engine is transmitted as rotational power of the other direction, and a third position at which the power of the engine is not transmitted;
a clutch position detection means detecting the clutch switching position of the clutch part; and
a control means controlling the engine based on the switching position of the clutch part detected by the clutch position detection means and the power of the engine calculated from operation amount of an electronic governor,
**characterized in that**
in the control means, the minimum value of the power in the case in which the switching position of the clutch part is the first position or the second position is set as a first set value,
the minimum value of the power in the case in which the switching position of the clutch part is the third position is set as a second set value,
when the state in which the switching position of the clutch part is the first position or the second position and the power is equal to or less than the second set value is kept for a predetermined period, the clutch position detection means is judged to be abnormal,
when the state in which the switching position of the clutch part is the third position and the power is equal to or more than the first set value is kept for the predetermined period, the clutch position detection means is judged to be abnormal, and
when the state in which the switching position of the clutch part is the first position and the second position is kept for the predetermined period, the clutch position detection means is judged to be abnormal.

2. The engine controller according to claim 1,
wherein when the clutch position detection means is judged to be abnormal and the power is kept to be equal to or less than the second set value for the predetermined period,
the control means makes a control gain of the engine low,
and when the clutch position detection means is judged to be abnormal and the power is kept to be equal to or more than the first set value for the predetermined period,
the control means makes the control gain of the engine high.

3. The engine controller according to claim 1 or 2,
wherein when the clutch position detection means is judged to be abnormal and the power is kept to be equal to or less than the second set value for the predetermined period,
the engine control means invalidates the operation of output of the engine,
and when the clutch position detection means is judged to be abnormal and the power is kept to be equal to or more than the first set value for the predetermined period,
the engine control means validates the operation of output of the engine.
